# EUROPÄISCHE PATENTSCHRIFT

(11) **EP 3 238 963 B1**
(45) Veröffentlichungstag und Bekanntmachung des Hinweises auf die Patenterteilung: **30.01.2019**
(21) Anmeldenummer: 17155761.4
(22) Anmeldetag: 13.02.2017
(51) Int. Cl.: B60C 23/00, B60C 23/04

(54) **VERFAHREN ZUM ÜBERWACHEN VON REIFENZUSTÄNDEN AN FAHRZEUGREIFEN**
METHOD FOR MONITORING TIRE CONDITIONS OF VEHICLE TYRES
PROCÉDÉ DE SURVEILLANCE D'ÉTATS DE PNEU D'UN VÉHICULE AUTOMOBILE

(30) Priorität: 28.04.2016 DE 102016207269
(43) Veröffentlichungstag der Anmeldung: 01.11.2017
(73) Patentinhaber: Continental Reifen Deutschland GmbH, 30165 Hannover (DE)
(72) Erfinder: Cyllik, Adrian, 30159 Hannover (DE)
(74) Vertreter: Widjaja, Wira

(56) Entgegenhaltungen:
- EP-A1- 1 946 945
- DE-A1-102008 032 920

## Beschreibung

Die Erfindung betrifft ein Verfahren zum Überwachen von Reifenzuständen an Fahrzeugreifen.

Zur Überwachung von Reifenzuständen, insbesondere einem Reifendruck, von Reifen eines Nutzfahrzeuges sind Reifen-Sensor-Module bzw. Transponder bekannt, die beispielsweise im Inneren eines Reifens angeordnet sind. Derartige Reifen-Sensor-Module sind ausgebildet, positionsgebunden einen Reifendruck, mechanische Spannungszustände im Reifen sowie eine Reifentemperatur zu erfassen, zu verarbeiten und per hochfrequentem (HF) Funksignal über ein Datentelegramm an ein elektronisches Steuergerät (ECU) eines Überwachungssystems zu übertragen. Das Steuergerät nimmt das Datentelegramm über ein Empfangsmodul des Überwachungssystems auf und gibt in Abhängigkeit von Grenzwerten ein Warnsignal an den Fahrer aus, beispielsweise wenn an einem der Reifen ein Reifendruck unterhalb eines Grenzwertes festgestellt wurde. Ein Beispiel für ein solches Reifen-Sensor-Modul offenbart die DE 102 43 441 A1.

Werden die Reifen eines zweiteiligen Nutzfahrzeuges aus einem Zugfahrzeug und einem Anhängerfahrzeug, d.h. Auflieger oder Anhänger überwacht, so werden die Reifen-Sensor-Module des Zugfahrzeuges über eine Sensor-Kennung bzw. eine Sensor-Identifikation bereits vorab im Steuergerät eingespeichert, wobei das jeweilige Reifen-Sensor-Modul einem Reifen des Zugfahrzeuges eindeutig zugeordnet wird. Ist ein Anhängerfahrzeug für einen längeren Zeitraum mit dem Zugfahrzeug verbunden, können die Reifen-Sensor-Module dieses Anhängerfahrzeuges ebenfalls im Steuergerät gespeichert und den einzelnen Reifen eindeutig zugeordnet werden. Wird das Anhängerfahrzeug jedoch häufig gewechselt, werden die Reifen-Sensor-Module des Anhängerfahrzeuges vom Überwachungssystem durch eine automatische Anhänger-Erkennung eingebunden. Dadurch ist bei einem Wechsel des Anhängerfahrzeuges kein manuelles Einspeichern nötig, allerdings können die jeweiligen Reifen-Sensor-Module den Reifen des Anhängerfahrzeuges nicht positionsgebunden einem bestimmten Reifen zugeordnet werden. Ein solches System ist aus der EP1946945 A1 bekannt.

Zur automatischen Anhänger-Erkennung wird von dem Überwachungssystem bei fahrendem Nutzfahrzeug ein Überwachungsbereich auf Datentelegramme von beliebigen Reifen-Sensor-Modulen überwacht, die dem Steuergerät noch nicht bekannt sind. Wird ein neues bzw. unbekanntes Reifen-Sensor-Modul erfasst, wird über einen längeren Zeitraum von beispielsweise bis zu dreißig Minuten festgestellt und plausibilisiert, ob das unbekannte Reifen-Sensor-Modul zum eigenen Anhängerfahrzeug gehört oder nicht. Dies erfolgt beispielsweise durch eine Prüfung, ob sich das Reifen-Sensor-Modul über diesen Zeitraum mit dem Zugfahrzeug mitbewegt oder nicht, indem überwacht wird, ob von diesem unbekannten Reifen-Sensor-Modul über diesen Zeitraum eine bestimmte Anzahl an Datentelegrammen übermittelt werden. Ist die Anhänger-Erkennung abgeschlossen, d.h. es wird eine Zugehörigkeit des Reifen-Sensor-Moduls oder auch mehrerer Reifen-Sensor-Module zum eigenen Anhängerfahrzeug festgestellt, ist das Überwachungssystem bereit, die entsprechenden Datentelegramme des Reifen-Sensor-Moduls auch zu verarbeiten bzw. auszuwerten und beispielsweise Warnsignale in Abhängigkeit der erfassten Reifenzustände auszugeben.

Nachteilig dabei ist, dass das Einbinden aller im Überwachungsbereich erkannten und dem eigenen Anhängerfahrzeug zugeordneten Reifen-Sensor-Module sehr lange dauert und der Fahrer des Nutzfahrzeuges somit bis zur Fertigstellung der Anhänger-Erkennung keine Rückmeldung über den Zustand der Reifen seines Anhängers oder über den Zustand des Reifen-Sensor-Moduls, beispielsweise bei einem defekten Sensor, bekommt. Zudem muss sich das Fahrzeug in Bewegung befinden. Dadurch kann der Fall eintreten, dass bei einem Wechsel des Anhängerfahrzeuges die Fahrt mit einem defekten Reifen oder einem defekten Sensor fortgesetzt wird, wodurch sich fahrkritische Situationen ergeben können. Der Erfindung liegt daher die Aufgabe zugrunde, ein Verfahren zur Überwachung von Reifenzuständen bereitzustellen, mit dem mit geringem Zeitaufwand der Zustand von Reifen insbesondere eines eigenen Anhängerfahrzeuges werden können, um fahrkritische Situationen vermeiden zu können.

Gelöst wird die Aufgabe durch ein Verfahren nach Anspruch 1. Die Unteransprüche geben bevorzugte Weiterbildungen an.

Erfindungsgemäß ist demnach vorgesehen, alle in einem Überwachungsbereich eines eigenen Nutzfahrzeuges mit angekoppeltem Anhängerfahrzeug erfassten Reifen-Sensor-Module zu überwachen. Dies bedeutet beispielsweise, dass von allen in dem Überwachungsbereich erfassten Reifen-Sensor-Modulen übertragene Datentelegramme bereits ausgewertet werden bevor eine Feststellung, ob die erfassten Reifen-Sensor-Module dem eigenen Anhängerfahrzeug zugeordnet sind, abgeschlossen ist.

Dadurch wird erfindungsgemäß erkannt, dass eine sofortige Auswertung nach dem Erfassen eines Reifen-Sensor-Moduls wichtiger ist als zunächst festzustellen, ob ein erfasstes Reifen-Sensor-Modul zum eigenen Anhängerfahrzeug gehört. Vorteilhafterweise wird das Verfahren angewandt, um direkt nach einem Ankoppeln eines neuen Anhängerfahrzeuges oder bei Fahrtbeginn Reifenzustände der Reifen dieses Anhängerfahrzeuges bzw. Sensorzustände der Reifen-Sensor-Module an den Reifen des neuen Anhängerfahrzeugs auch überwachen zu können, wobei die Auswertung beispielsweise startet, sobald die Zündung des Fahrzeuges betätigt wird, d.h. bereits bevor sich das Fahrzeug in Bewegung setzt.

Bei der Auswertung der Datentelegramme werden alle Datentelegramme aussortiert, die von Fahrzeugreifen stammen, die an einer anderen Zugmaschine angeordnet sind.

Auf diese Weise wird die Anzeige von Fehlwarnungen wesentlich reduziert, da ein potentieller Minderdruck an Fahrzeugreifen einer benachbarten Zugmaschine bei der Auswertung nicht berücksichtigt wird.

Bei einem Anhänger liegt häufig der Solldruck bei 9 bar. Das heißt, dass bei Drücken unterhalb von 7,2 bar eine Warnung erfolgen würde.

Bei Zugmaschinen können häufig Solldrücke von 7,5 bar vorliegen. Das heißt, dass schon eine geringe Druckabweichung bei einer benachbarten Zugmaschine eine Fehlwarnung am eigenen Fahrzeug zur Folge hätte.

Die Wahrscheinlichkeit, dass die Warnmeldung unberechtigt ist, wird dadurch mehr als halbiert. Dies gilt sowohl bei stehenden Fahrzeugen als auch fahrenden Fahrzeugen. Weiterhin werden in den Datentelegrammen der einzelnen Reifen die Sollwerte für alle überwachten Reifenzustände übertragen und im Steuergerät mit hinterlegten Grenzwerten verglichen. Dadurch wird die Anzahl von Fehlwarnungen ebenfalls wesentlich reduziert.

Mit diesem Ansatz kann auch die Zuverlässigkeit der automatischen Anhängererkennung verbessert werden. Bei der Anhängererkennung werden zunächst alle unbekannten Reifen-Sensor-Module berücksichtigt. Wenn mit dem Datentelegramm bereits die Information übertragen wird, dass das unbekannte Reifen-Sensor-Module zu einer Zugmaschine und nicht zu einem Anhängerfahrzeug gehört, können die Datentelegramme für die automatische Anhängererkennung verworfen werden. Damit kann ausgeschlossen werden, dass fälschlicher Weise ein Reifen-Sensor-Modul einer fremden Zugmaschine dem eigenen Anhänger zugeordnet wird, und die automatische Anhängererkennung kann auch damit beschleunigt werden.

Bei dem Erfassen wird zunächst ermittelt, ob ein Datentelegramm von einem unbekannten Reifen-Sensor-Modul empfangen wird. Unbekannt heißt, dass das im Überwachungsbereich befindliche Reifen-Sensor-Modul beispielsweise nicht dem eigenen Zugfahrzeug zugeordnet ist, wobei dazu beispielsweise eine vom Reifen-Sensor-Modul über das Datentelegramm übertragene Sensor-Kennung bzw. Sensor-Identifikation abgeglichen werden kann.

Das erfindungsgemäße Überwachen bzw. Auswerten beinhaltet weitergehend, dass das von dem erfassten und noch unbekannten Reifen-Sensor-Modul empfangene, die Reifenzustände und/oder den Sensorzustand charakterisierende Datentelegramm beispielsweise mit einem Grenzwert verglichen bzw. auf kritische Sensorzustände überwacht wird.

Als Reifenzustände werden insbesondere eine Reifentemperatur, mechanische Spannungszustände, eine Profiltiefe, eine Radlast oder ein Reifendruck verstanden, die von dem Reifen-Sensor-Modul, das vorzugsweise im Inneren des Reifens angeordnet ist, gemessen, verarbeitet und über das Datentelegramm drahtlos, vorzugsweise über ein hochfrequentes (HF) Funksignal, an das Steuergerät (ECU) eines Überwachungssystem übermittelt wird. Ein Reifen-Sensor-Modul übermittelt hierbei beispielsweise alle ca. 16 Sekunden ein Datentelegramm mit insbesondere den Reifenzuständen des entsprechenden Reifens sowie dem Sensorzustand. Das Steuergerät vergleicht diese Reifenzustände und gibt beispielsweise bei einem Überschreiten der Reifentemperatur über eine Solltemperatur bzw. bei einem Unterschreiten des Reifendruckes unter einen Solldruck ein Warnsignal an den Fahrer aus, so dass dieser darauf entsprechend reagieren kann. Das Erfassen und Vergleichen kann hierbei von einer entsprechenden Software auf dem Steuergerät durchgeführt werden.

Als kritischer Sensorzustand wird insbesondere ein Defekt des Reifen-Sensor-Moduls oder ein loses Reifen-Sensor-Modul verstanden. Wird vom Reifen-Sensor-Modul ein kritischer Sensorzustand erkannt, wird dieser über das Datentelegramm ausgegeben. Das Steuergerät überwacht das Datentelegramm im Hinblick auf einen kritischen Sensorzustand und gibt in dem Fall ein entsprechendes Warnsignal an den Fahrer aus. Ergänzend kann das Steuergerät die Datentelegramme auch bezüglich eines schlechten Empfangs überwachen, indem beispielsweise temporär ausbleibende Datentelegramme mit einer bestimmten Sensor-Identifikation überwacht werden.

Somit wird der Vorteil erreicht, dass sofort nachdem ein Reifen-Sensor-Modul erfasst wurde, fahrkritische Reifenzustände bzw. Reifenzustände, die zu einer Schädigung des Reifens führen können, wie beispielsweise eine erhöhte Reifentemperatur oder ein zu niedriger Reifendruck sowie kritische Sensorzustände erkannt werden können. Der Fahrer kann dann kontrollieren, ob ein Reifen bzw. ein Reifen-Sensor-Modul des eigenen Anhängerfahrzeuges betroffen ist oder ein benachbartes Nutzfahrzeug, d.h. ein benachbartes Zugfahrzeug und/oder Anhängerfahrzeug, im Überwachungsbereich beispielsweise einen defekten Reifen oder einen defekten Reifen-Sensor-Modul aufweist. Die Sicherheit steigt, da bei einem Warnsignal sofort reagiert werden kann und die Gefahr minimiert wird, dass der Fahrer nach einem Wechsel des Anhängerfahrzeuges seine Fahrt mit einem defekten Reifen oder einem defekten Reifen-Sensor-Modul am Anhänger fortsetzt bzw. überhaupt beginnt. Vorteilhafterweise muss der Fahrer somit nach dem Wechsel des Anhängers oder bei Wiederaufnahme der Fahrt nicht warten bis die Feststellung, ob es sich um ein Reifen-Sensor-Modul des eigenen Anhängers handelt, abgeschlossen ist.

Die Feststellung, ob das erfasste und unbekannte Reifen-Sensor-Modul dem eigenen Anhängerfahrzeug zugeordnet ist, findet dabei gemäß einer vorteilhaften Weiterbildung zusätzlich im Hintergrund statt, während sich das eigene Nutzfahrzeug bewegt. Dazu wird vorzugsweise überwacht und plausibilisiert, ob von ein und demselben bisher unbekannten Reifen-Sensor-Modul über einen festgelegten Zeitraum von beispielsweise acht bis zehn Minuten eine bestimmte Anzahl an Datentelegrammen, beispielsweise 30 Datentelegramme, empfangen werden, wobei lediglich Reifen-Sensor-Module berücksichtigt werden, die sich ebenfalls bewegen. Dazu kann beispielsweise die auf dem Reifen-Sensor-Modul gespeicherte und drahtlos übertragene Sensor-Identifikation über den Zeitraum überwacht werden. Wird ein Reifen-Sensor-Modul dem eigenen Anhängerfahrzeug zugeordnet, wird dieses Reifen-Sensor-Modul im Steuergerät beispielsweise als bekannt zwischengespeichert und solange überwacht, bis die Anhängererkennung erneut gestartet wird. Diese Feststellung wird parallel für alle erfassten und unbekannten Reifen-Sensor-Module durchgeführt. Ist die Zuordnung aller Reifen-Sensor-Module für das eigene Anhängerfahrzeuges abgeschlossen, kann die Anhänger-Erkennung abgeschaltet werden, um die Warnsignale auf das eigene Nutzfahrzeug zu beschränken. Ab dem Zeitpunkt werden vorteilhafterweise lediglich bekannte Reifen-Sensor-Module ausgewertet.

Vorteilhafterweise wird der Grenzwert für die Reifentemperatur, den mechanischen Spannungszustand, die Profiltiefe, die Radlast sowie den Reifendruck für das erfindungsgemäße Auswerten derartig gewählt, dass kritische Fahrsituationen vermieden werden können, wobei bei einer kritischen Fahrsituation beispielsweise ein Reifen zu brennen beginnen kann oder der Reifen von der Felge rutschen kann. Darunter wird aber auch verstanden, dass eine Schädigung des Reifens über die Zeit beispielsweise aufgrund einer signifikant erhöhten Temperatur oder eines signifikant zu niedrigen Druckes auftreten kann. Dazu kann beispielsweise ein Grenzwert von kleiner oder gleich in etwa 80% eines Solldruckes oder größer oder gleich in etwa 120% einer Solltemperatur gewählt werden. Diese Grenzwerte werden lediglich in kritischen Ausnahmefällen erreicht, wenn beispielsweise ein Reifen von einem Fremdkörper durchstoßen wurde oder wenn ein Reifen blockiert. Entsprechendes gilt für die Grenzwerte für die Profiltiefe, die Radlast und den mechanischen Spannungszustand. Vorteilhafterweise können auch die Warnsignale bei kritischen Sensorzuständen des Reifen-Sensor-Moduls auf bestimmte Sensorzustände, beispielsweise lediglich auf einen Sensor-Defekt beschränkt werden.

Dadurch ergibt sich der Vorteil, dass die Anzahl der Warnsignale verringert werden kann, da bei einer zu geringeren Abweichung vom entsprechenden Sollwert und bei einer Anhäufung von Nutzfahrzeugen, beispielsweise auf einem Parkplatz, die Anzahl der Warnsignale sehr hoch ist, da geringe Schwankungen beispielsweise des Reifendruckes möglich sind, ohne dass es dabei zu einer fahrkritischen Situation kommt. Weiterhin kann es vorkommen, dass bei benachbarten Fahrzeugen andere Sollwerte vorgegeben sind, da sie andere Reifentypen haben oder anders beladen sind. Somit wird erkannt, dass für die Wahl des Grenzwertes eine höhere Abweichung vom entsprechenden Sollwert sinnvoller ist, um nicht zu viele Warnsignale zu erhalten, dabei aber zumindest ein kritisches Fahrverhalten verhindert werden kann.

Die o.g. Grenzwerte für eine kritische Fahrsituation gelten hierbei vorteilhafterweise lediglich solange die automatische Anhänger-Erkennung noch nicht abgeschlossen ist. Ist die Anhänger-Erkennung abgeschlossen, können die Grenzwerte derartig eingestellt werden, dass auch Warnmeldungen ausgegeben werden, wenn eine Abweichung vom Grenzwert bzw. ein bestimmter Sensorzustand nicht zu einer kritischen Fahrsituation führt.

Gemäß einer vorteilhaften Weiterbildung ist vorgesehen, dass das Reifen-Sensor-Modul einen Bewegungszustand erfasst und über das Datentelegramm ausgibt. Die Reifen-Sensor-Module sind hierbei ausgebildet, aus einer Messung der Beschleunigung, vorzugsweise der Radialbeschleunigung und/oder der Tangentialbeschleunigung und/oder der Lateralbeschleunigung zu erkennen, ob sich das Reifen-Sensor-Modul und somit auch der entsprechende Reifen bewegt. Diese Information kann über das Datentelegramm ebenfalls an das Steuergerät drahtlos übertragen werden.

Dadurch kann der Vorteil erreicht werden, dass die erfindungsgemäße Auswertung im Steuergerät in Abhängigkeit des Bewegungszustandes stattfinden kann. Als Bewegungszustände kommen hierbei beispielsweise ein Stillstand bzw. eine langsame Fahrt mit beispielsweise einer Geschwindigkeit des Reifen-Sensor-Moduls, die einer Fahrzeuggeschwindigkeit von weniger als 20 km/h entspricht, oder ein Fahrzustand beispielsweise mit einer Fahrzeuggeschwindigkeit von 20 km/h oder mehr in Frage.

Demnach kann vorteilhafterweise vorgesehen sein, lediglich dann die durch das Datentelegramm ausgegebenen Reifenzustände mit dem Grenzwert zu vergleichen oder einen kritischen Sensorzustand zu überwachen, wenn das eigene Zugfahrzeug denselben Bewegungszustand aufweist wie das Reifen-Sensor-Modul, dessen Reifenzustände bzw. Sensorzustände bewertet werden sollen. Befindet sich also das eigene Zugfahrzeug im Stillstand bzw. in langsamer Fahrt, werden lediglich Reifenzustände bzw. Sensorzustände von Reifen-Sensor-Modulen bewertet, die sich ebenfalls langsam bewegen oder stillstehen. Ergänzend oder alternativ kann vorgesehen sein, dass bei einem Fahrtzustand, d.h. bei einer Bewegung des eigenen Nutzfahrzeuges mit mehr als 20 km/h lediglich Reifenzustände bzw. Sensorzustände von Reifen-Sensor-Modulen bewertet werden, die sich ebenfalls mit einer Geschwindigkeit bewegen, die einer Fahrzeuggeschwindigkeit von beispielsweise 20km/h oder mehr entspricht.

Dadurch steigt in beiden Fällen die Wahrscheinlichkeit, dass das ausgegebene Warnsignal vom eigenen Anhängerfahrzeug stammt, da sich dieses ebenfalls nicht bzw. nur langsam oder schneller bewegt. Die Anzahl der Warnsignale kann dadurch vorteilhafterweise weiter reduziert werden.

Anhand eines Ausführungsbeispiels soll die Erfindung näher erläutert werden. Es zeigen:
- Fig. 1:: ein Nutzfahrzeug mit einem Zugfahrzeug und einem Anhängerfahrzeug und einem benachbarten Nutzfahrzeug; und
- Fig. 2:: ein Flussdiagramm zur erfindungsgemäßen Überwachung eines Reifenzustandes.

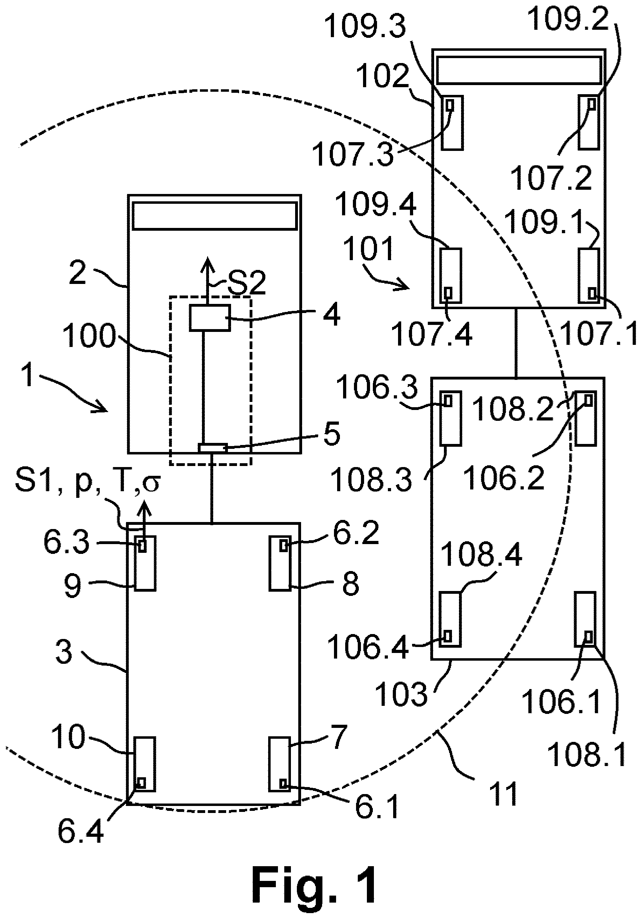

Die Fig. 1 zeigt ein Nutzfahrzeug 1 mit einem Zugfahrzeug 2 und einem Anhängerfahrzeug 3.

Mit dem Begriff Zugmaschine sind alle Fahrzeuge gemeint sind, die nicht gezogen werden können bzw. keine Anhänger sind. Mit einer Zugmaschine sind somit Sattelzugmaschinen, normale LKW's (Kastenwagen), Busse, Gabelstapler, etc. gemeint.

An dem Zugfahrzeug 2 ist ein Steuergerät 4 (ECU) vorgesehen, das mit einem Empfangsmodul 5 verbunden ist. Im Steuergerät 4 kann ebenfalls ein nicht dargestelltes Empfangsmodul enthalten sein. Das Empfangsmodul 5 ist hierbei vorzugsweise an einem hinteren Ende des Zugfahrzeuges 2 angeordnet. Das Empfangsmodul 5 ist ausgebildet, ein Datentelegramm S1 von Reifen-Sensor-Modulen 6.i, mit i=1 bis 4 zu empfangen. Gemäß Fig. 1 sind die Reifen-Sensor-Module 6.i beispielhaft lediglich an den Reifen 7, 8, 9, 10 des Anhängerfahrzeuges 3 angeordnet und geben jeweils drahtlos, beispielsweise über ein hochfrequentes Funksignal, ein Datentelegramm S1 aus. Weitere, nicht dargestellte Reifen-Sensor-Module sind an den Reifen des Zugfahrzeuges 2 angeordnet, deren Funksignale insbesondere vom Empfangsmodul 5 sowie ggf. von dem weiteren Empfangsmodul im Steuergerät 4 aufgenommen werden können. Das Steuergerät 4 verarbeitet die vom Empfangsmodul 5 aufgenommen Signale weiter. Das Steuergerät 4 und das Empfangsmodul 5 sowie ggf. das weitere Empfangsmodul im Steuergerät 4 bilden hierbei ein Überwachungssystem 100 zur Überwachung von Reifenzuständen p, T, σ und kritischen Sensorzuständen unter Verwendung der Reifen-Sensor-Module 6.i und ggf. weiterer Reifen-Sensor-Module 106.i, 107.i.

Die Reifen-Sensor-Module 6.i sind hierbei jeweils am Reifen 7, 8, 9, 10 angeordnet und können Reifenzustände, wie beispielsweise einen Reifendruck p, eine Reifentemperatur T sowie mechanische Spannungen σ erfassen, die erfassten Reifenzustände p, T, σ verarbeiten und über das Datentelegramm S1 drahtlos ausgeben. Weiterhin können über das Datentelegramm S1 eine Sensor-Identifikation bzw. eine Sensor-Kennung, ein kritischer Sensorzustand, beispielsweise ein Sensor-Defekt oder ein loses Reifen-Sensor-Modul 6.i sowie ein Bewegungszustand des jeweiligen Reifens 7, 8, 9, 10 ausgegeben werden.

Befindet sich ein derartiges Reifen-Sensor-Modul 6.i in einem Überwachungsbereich 11 des Empfangsmoduls 5 oder des Steuergerätes 4, kann das Reifen-Sensor-Modul 6.i vom Steuergerät 4 zunächst erfasst und daraufhin überprüft werden, ob dieses Reifen-Sensor-Modul 6.i an einem der Reifen des eigenen Zugfahrzeuges 2 angeordnet ist, d.h. bereits bekannt ist. Dies kann beispielsweise anhand der Sensor-Identifikation erfolgen.

Beim Auswerten der Datentelegramme wird geprüft, ob es von einem Reifen-Sensor-Modul stammt, welches an einem Fahrzeugreifen einer Zugmaschine (102) montiert ist. Wenn das der Fall ist, wird dieses Datentelegramm direkt aussortiert.

Dadurch wird eine Fehlwarnung vermieden, die sich aufgrund eines Minderdruckes eines Fahrzeugreifens (107.1 bis 107.4) an der benachbarten Zugmaschine (102) ergeben könnte.

Ist das erfasste Reifen-Sensor-Modul 6.i unbekannt, wird das Datentelegramm S1 ausgewertet, indem die über das Datentelegramm S1 übermittelten Reifenzustände p, T, σ mit Grenzwerten GW verglichen werden, wobei die Grenzwerte GW prozentuale Abweichungen von einem Sollwert, z.B. einer Solltemperatur TSoll oder einem Solldruck pSoll oder einer Sollspannung σSoll angeben. Diese Sollwerte werden für jeden Reifen mit dem Datentelegramm S1 mit übertragen. Sind die Grenzwerte GW unter- bzw. überschritten, d.h. liegt beispielsweise ein zu niedriger Reifendruck p oder eine zu hohe Reifentemperatur T vor, wird vom Steuergerät 4 ein Warnsignal S2 an den Fahrer ausgegeben. Werden mehrere unbekannte Reifen-Sensor-Module 6.i erfasst, findet die Auswertung der Datentelegramme S1 aller Reifen-Sensor-Module 6.i parallel statt.

Weiterhin werden von der Steuereinrichtung 4 die über das Datentelegramm S1 übermittelten Sensorzustände überwacht und bei einem Erkennen eines kritischen Sensorzustandes ein Warnsignal S2 an den Fahrer ausgegeben.

Der Überwachungsbereich 11 kann beispielsweise 20-25m betragen. Dadurch können auch unbekannte Reifen-Sensor-Module 106.i, 107.i an Reifen 108.i und 109.i eines benachbarten Nutzfahrzeuges (101) mit einem Zugfahrzeug 102 und einem Anhängerfahrzeug 103 erfasst werden, das sich gemäß Fig. 1 zumindest teilweise im Überwachungsbereich 11 befindet. Die Datentelegramme S1 der Reifen-Sensor-Module 107.i an den Reifen 109.i von dem Zugmaschine 102 werden vorab ausgefiltert, da für die weitere Auswertung nur Datentelegramme S1 von Reifen-Sensor-Modulen berücksichtigt werden, die an einem Anhängerfahrzeug (3, 103) montiert sind. Damit bei der Auswertung der Datentelegramme S1 aller erfassten und unbekannten Reifen-Sensor-Module 6.i, 106.i nicht zu viele Warnsignale S2 an den Fahrer ausgegeben werden, werden die Grenzwerte GW derartig festgelegt, dass der Fahrer lediglich bei fahrkritischen Reifenzuständen einen Hinweis erhält. So kann beispielsweise der Grenzwert GW für den Reifendruck p auf einen Wert von kleiner oder gleich 80% des Solldrucks pSoll, beispielsweise auf 20% Minderdruck, d.h. 80% des Solldrucks pSoll bzw. GW = 0.8 x pSoll, festgelegt werden, wodurch lediglich geringe Schwankungen beim Reifendruck p, die zu keiner fahrkritischen Situation führen, kein Warnsignal S2 auslösen. Weiterhin können auch die Sensorzustände, bei denen ein Warnsignal S2 ausgelöst wird, beschränkt werden.

Da während der Auswertung unmittelbar nach der Erfassung zunächst unklar ist, ob das unbekannte Reifen-Sensor-Modul 6.i, 106.i, an einem Reifen 7, 8, 9, 10 des eigenen Anhängerfahrzeuges 3 angeordnet ist, muss der Fahrer bei einem Warnsignal S2 selbst überprüfen, ob dieses von einem Reifen-Sensor-Modul 6.i des eigenen Anhängerfahrzeuges 3 oder des benachbarten Anhängerfahrzeuges 103 stammt, indem er die Reifen 7, 8, 9, 10 bzw. 108.i überprüft.

Zusätzlich wird in dem Steuergerät 4 eine automatische Anhänger-Erkennung durchgeführt, die über einen Zeitraum dT feststellt bzw. plausibilisiert, ob die empfangenen Datentelegramme S1 von den Reifen-Sensor-Modulen 6.i des eigenen Anhängerfahrzeuges 3 ausgegeben werden. Wurde eine entsprechende Anzahl an Reifen-Sensor-Modulen 6.i für das eigene Anhängerfahrzeug 3 erkannt, kann die Anhänger-Erkennung abgeschaltet werden, um unnötige Warnsignale S2 zu vermeiden.

Gemäß einer Weiterbildung des Verfahrens ist vorgesehen, dass der von den Reifen-Sensor-Modulen 6.i, 106.i, 107.i ausgegebene Bewegungszustand bei der Auswertung berücksichtigt wird. Die Reifen-Sensor-Module 6.i, 106.i bestimmen dabei beispielsweise aus einer vorherrschenden Radialbeschleunigung, ob sich der entsprechende Reifen bewegt oder steht, d.h. ob sich das Fahrzeug mit diesem Reifen in einem Fahrzustand oder im Stillstand bzw. in langsamer Fahrt befindet.

Um keine unnötigen Warnsignale S2 zu erzeugen, kann demnach berücksichtigt werden, ob die Datentelegramme S1 bzw. die Reifenzustände p, T, σ oder Sensorzustände von Reifen-Sensor-Modulen 6.i, 106.i ausgegeben werden, die denselben Bewegungszustand aufweisen wie das eigene Zugfahrzeug 2. Somit können bei einem parkenden, im Stillstand oder in langsamer Fahrt befindlichen Zugfahrzeug 2 alle Reifen-Sensor-Module 6.i, 106.i von der Auswertung ausgeschlossen werden, die sich mit einer Geschwindigkeit bewegen, die einer Fahrzeuggeschwindigkeit von beispielsweise 20km/h oder mehr entspricht. Ergänzend oder alternativ können bei einem sich mit mehr als 20/km/h bewegenden Zugfahrzeug 2 alle Reifen-Sensor-Module 6.i, 106.i, die sich nicht oder nur langsam bewegen bei der Auswertung ausgeschlossen werden.

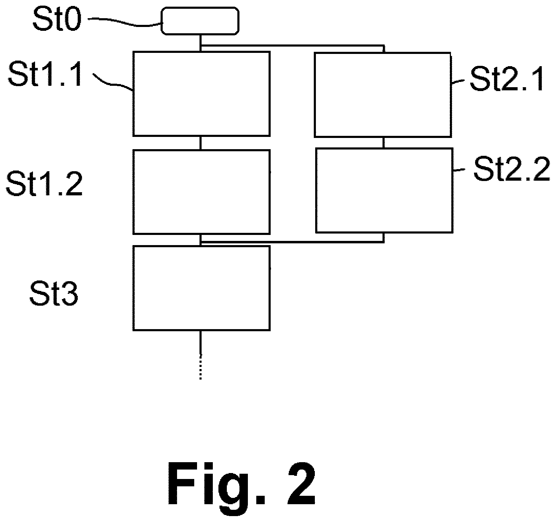

Das erfindungsgemäße Verfahren kann gemäß Fig. 2 wie folgt durchgeführt werden:
In einem Schritt St0 beginnt das Verfahren beispielsweise mit dem Starten des Nutzfahrzeuges 1 oder nachdem das Nutzfahrzeug 1 eine bestimmte Zeit von beispielsweise 15 Minuten nicht gefahren ist. Nach dem Schritt St0 verzweigt sich das Verfahren, wobei in einem ersten Zweig die automatische Anhänger-Erkennung durchgeführt wird, d.h. die Feststellung, ob ein unbekanntes Reifen-Sensor-Modul 6.i, 106.i, 107.i dem eigenen Anhängerfahrzeug 3 zugeordnet ist oder nicht, und in einem parallel dazu verlaufenden zweiten Zweig das erfindungsgemäße Überwachen der Reifenzustände p, T, σ bzw. der Sensorzustände stattfindet.

Im ersten Zweig wird in einem ersten Schritt St1.1 erfasst, ob sich das eigene Nutzfahrzeug 1 bewegt. Ist dies nicht der Fall, werden die von dem mindestens einen im Überwachungsbereich 11 befindlichen unbekannten Reifen-Sensor-Modul 6.i, 106.i, 107.i empfangen Datentelegramme S1 verworfen, da die automatische Anhänger-Erkennung lediglich bei einem sich bewegenden Nutzfahrzeug 1 durchgeführt wird. Dementsprechend werden auch keine Warnsignale S2 ausgegeben.

Wird eine Bewegung des eigenen Nutzfahrzeuges 1 erfasst, werden in einem zweiten Schritt St1.2 dieses Zweiges die über das Datentelegramm S1 übertragene Sensor-Identifikation des unbekannten bzw. aller unbekannten Reifen-Sensor-Module 6.i, 106.i, 107.i bewertet, wobei nur Datentelegramme S1 von Reifen-Sensor-Modulen berücksichtigt werden, die auf einem Anhängerfahrzeug (3, 103) montiert sind. Die so gefilterten Datentelegramme S1 der Reifen-Sensor-Module 6.i, 106.i werden über einen Zeitraum dT gesammelt und gezählt, wobei hierzu nur sich bewegende Reifen-Sensor-Module 6.i, 106.i, berücksichtigt werden. Währenddessen werden keine Warnsignale S2 ausgegeben.

In dem zweiten Zweig werden parallel dazu in einem ersten Schritt St2.1 bereits bei stehendem Nutzfahrzeug 1 die Datentelegramme S1 der unbekannten Reifen-Sensor-Module 6.i, 106.i, 107.i ausgewertet, wobei die Datentelegramme S1 der Reifen-Sensor-Module 107.i zu Beginn der Auswertung verworfen werden, da sie nicht zu einem Anhängerfahrzeug (3, 103) gehören. Für die weitere Auswertung werden die über das Datentelegramm S1 übertragenen Reifenzustände p, T, σ jeweils mit einem Grenzwert GW verglichen bzw. die Sensorzustände auf kritische Sensorzustände überwacht. Bei entsprechender Überschreitung bzw. Unterschreitung des Grenzwertes GW oder bei Vorliegen eines kritischen Sensorzustandes werden Warnsignale S2 ausgegeben. Gemäß diesem Ausführungsbeispiel werden hierbei lediglich Reifen-Sensor-Module 6.i, 106.i ausgewertet, die ebenfalls nicht in Bewegung sind.

Ergänzend werden in einem Schritt St2.2 auch bei fahrendem Nutzfahrzeug 1 die Datentelegramme S1 der unbekannten Reifen-Sensor-Module 6.i, 106.i, 107.i ausgewertet, indem die übertragenen Reifenzustände p, T, σ jeweils mit dem Grenzwert GW verglichen werden oder der Sensorzustand überwacht wird, wobei die Datentelegramme S1 der Reifen-Sensor-Module 107.i zu Beginn der Auswertung verworfen werden, da sie nicht zu einem Anhängerfahrzeug (3, 103) gehören. Bei entsprechender Überschreitung bzw. Unterschreitung des Grenzwertes GW werden Warnsignale S2 ausgegeben. Ebenso werden Warnsignale S2 ausgegeben, wenn der Sensorzustand beispielsweise auf einen Defekt hinweist. Gemäß diesem Ausführungsbeispiel werden hierbei lediglich Reifen-Sensor-Module 6.i, 106.i ausgewertet, die ebenfalls in Bewegung sind.

Nach den Schritten Stl.2 und St2.2 laufen die Zweige wieder zusammen. Nach diesen Schritten ist die automatische Anhänger-Erkennung abgeschlossen. Demnach ist im Schritt St3, nachdem die Reifen-Sensor-Module 6.i dem eigenen Anhängerfahrzeug 3 zugeordnet wurden, die automatische Anhänger-Erkennung beendet und die nun bekannten Reifen-Sensor-Module 6.i werden dauerhaft überwacht beispielsweise bis die automatische Anhänger-Erkennung neu gestartet wird.

Alternativ kann vorgesehen sein, dass die Datentelegramme S1 im Schritt St2.1 noch nicht verwertet werden. D.h. im erfindungsgemäßen Verfahren zur Überwachung von Reifenzuständen und Sensorzuständen werden erst im Fahrtzustand Warnsignale S2 ausgegeben, wenn der Grenzwert überschritten oder unterschritten ist und/oder ein kritischer Sensorzustand festgestellt wurde, wobei gemäß diesem Ausführungsbeispiel lediglich Reifen-Sensor-Module 6.i, 106.i berücksichtigt werden, die ebenfalls in Bewegung sind.

### Bezugszeichenliste

- 1: eigenes Nutzfahrzeug
- 2: eigenes Zugfahrzeug bzw. Zugmaschine
- 3: eigenes Anhängerfahrzeug
- 4: Steuergerät
- 5: Empfangsmodul
- 6.i: Reifen-Sensor-Module
- 7, 8, 9, 10: Reifen des Anhängerfahrzeuges 3
- 11: Überwachungsbereich
- 100: Überwachungssystem
- 101: benachbartes fremdes Nutzfahrzeug
- 102: benachbartes fremdes Zugfahrzeug bzw. Zugmaschine von 101
- 103: fremdes Anhängerfahrzeug von 101
- 106.i: Reifen-Sensor-Module an 103
- 107.i: Reifen-Sensor-Module an 102
- 108.i: Reifen des benachbarten Anhängerfahrzeuges 103
- 109.i: Reifen des benachbarten Zugfahrzeuges 102

- dT: Zeitraum
- GW: Grenzwerte
- p: Reifendruck
- pSoll: Solldruck
- T: Reifentemperatur
- TSoll: Solltemperatur
- σ: mechanischer Spannungszustand
- σSoll: Sollspannung
- S1: Datentelegramm
- S2: Warnsignale

- St0, St1.1, St1.2, St2.1, St2.2, St3: Verfahrensschritte

## Patentansprüche

1. Verfahren zum Überwachen von Reifenzuständen (p, T, σ) an Fahrzeugreifen (7, 8, 9, 10, 108.i, 109.i),
mit mindestens den folgenden Schritten,
a) Erfassen, ob mindestens ein Reifen-Sensor-Modul (6.i, 106.i, 107.i) zum Messen von Reifenzuständen (p, T, σ) in einem Überwachungsbereich (11) vorhanden ist;
b) Ermitteln, ob das mindestens eine erfasste Reifen-Sensor-Modul (6.i, 106.i, 107.i) unbekannt ist,
c) Auswerten von Datentelegrammen (S1) des mindestens einen erfassten und unbekannten Reifen-Sensor-Moduls (6.i, 106.i, 107.i),
wobei die Datentelegramme (S1) zumindest die Informationen umfassen,
ob das Reifen-Sensor-Modul an einem Fahrzeugreifen einer fremden Zugmaschine (102) oder an einem Fahrzeugreifen von einem Fahrzeuganhänger (3,103) angeordnet ist,
d) Aussortieren aller Datentelegramme (S1), die nicht von einem Fahrzeugreifen an einem Fahrzeuganhänger (3, 103) stammen,
wobei die Informationen von diesen Datentelegrammen (S1) bei der nachfolgenden Auswertung nicht berücksichtigt werden,
e) Auswerten von Datentelegrammen (S1) von unbekannten Reifen-Sensor-Modulen (6.i, 106.i), die von einem Fahrzeugreifen an einem Fahrzeuganhänger (3/103) stammen,
wobei das Auswerten zumindest einen Vergleich mindestens eines durch das Datentelegramm (S1) übertragenen Reifenzustandes (p, T, σ) mit einem Grenzwert (GW) umfasst (St2.1, St2.2),
wobei ein jeweiliger Sollwert, an dem sich der Grenzwert (GW) orientiert, für den einzelnen Fahrzeugreifen mit den Datentelegrammen (S1) mitübertragen wird,
f) Ausgeben eines Warnsignals (S2), wenn ein Reifenzustand (p, T, σ) den jeweiligen Grenzwert (GW) überschreitet bzw. unterschreitet, zum Anzeigen, dass ein Reifenzustand (p, T, σ) eines dem mindestens einen unbekannten Reifen-Sensor-Modul (6.i, 106.i, 107.i) zugeordneten Reifens (7, 8, 9, 10, 108.i, 109.i) kritisch ist.

2. Verfahren nach Anspruch 1,
**dadurch gekennzeichnet, dass**
von dem Reifen-Sensor-Modul (6.i, 106.i) als Reifenzustand eine Reifentemperatur (T) und/oder ein Reifendruck (p) und/oder ein mechanischer Spannungszustand (σ) und/oder eine Profiltiefe und/oder eine Radlast gemessen bzw. ermittelt und über das Datentelegramm (S1) ausgegeben wird.

3. Verfahren nach Anspruch 2,
**dadurch gekennzeichnet, dass**
der Grenzwert (GW) für den Reifendruck (p) kleiner oder gleich 80% eines Solldrucks (pSoll) für einen Fahrzeugreifen entspricht,
wobei das Ausgeben eines Warnsignals (S2) erfolgt,
wenn der Reifendruck (p) des entsprechenden Reifens (7, 8, 9, 10, 108.i) den Solldruckwert (pSoll) um mehr als 20% unterschreitet.

4. Verfahren nach einem der vorhergehenden Ansprüche,
**dadurch gekennzeichnet, dass**
das auf den Datenspeicher der Reifen-Sensor-Module nach der Montage im Fahrzeugreifen spezielle Reifendaten abspeichert werden und mit dem Datentelegramm (S1) übertragen werden können,
wobei die Reifendaten zumindestens Angaben zum Solldruck, zur Solltemperatur, zur mechanischen Sollspannung, zur Sollradlast, zur minimalen Profiltiefe und Montageinformationen umfassen,
wobei die Montageinformationen angeben, ob das Reifen-Sensor-Modul an einem Fahrzeugreifen einer Zugmaschine oder an einem Fahrzeugreifen von einem Fahrzeuganhänger montiert ist.

5. Verfahren nach einem der vorhergehenden Ansprüche,
**dadurch gekennzeichnet, dass**
der Grenzwert für die Reifentemperatur (T) größer oder gleich 120% einer Solltemperatur (TSoll) entspricht zum Ausgeben eines Warnsignals (S2) bei einer Temperaturüberschreitung des entsprechenden Reifens (7, 8, 9, 10, 108.i) von mehr als 20%.

6. Verfahren nach einem der vorhergehenden Ansprüche,
**dadurch gekennzeichnet, dass**
von dem Reifen-Sensor-Modul (6.i, 106.i) als kritischer Sensorzustand ein Sensor-Defekt und/oder ein loser Sensor erkannt und über das Datentelegramm (S1) ausgegeben wird.

7. Verfahren nach einem der vorherigen Ansprüche,
**dadurch gekennzeichnet, dass**
von dem Reifen-Sensor-Modul (6.i, 106.i, 107.i) über das Datentelegramm (S1) eine Sensor-Identifikation bzw. Sensor-Kennung ausgegeben wird zum Ermitteln, ob das Reifen-Sensor-Modul (6.i, 106.i, 107.i) unbekannt ist.

8. Verfahren nach einem der vorhergehenden Ansprüche,
**dadurch gekennzeichnet, dass**
das Reifen-Sensor-Modul (6.i, 106.i) erfasst, ob sich das Reifen-Sensor-Modul (6.i, 106.i) bewegt und der Bewegungszustand über das Datentelegramm (S1) ausgegeben wird.

9. Verfahren nach einem der vorhergehenden Ansprüche,
**dadurch gekennzeichnet, dass**
ein über das Datentelegramm (S1) ausgegebener Reifenzustand (p, T, σ) lediglich dann mit dem Grenzwert (GW) verglichen wird bzw. der Sensorzustand lediglich dann überwacht wird,
wenn der Bewegungszustand des eigenen Nutzfahrzeuges (1) dem Bewegungszustand des erfassten und unbekannten Reifen-Sensor-Moduls (6.i, 106.i) entspricht.

10. Verfahren nach einem der vorhergehenden Ansprüche,
**dadurch gekennzeichnet, dass**
ein über das Datentelegramm (S1) ausgegebener Reifenzustand (p, T, σ) lediglich dann mit dem Grenzwert (GW) verglichen wird bzw. der Sensorzustand lediglich dann überwacht wird, wenn sich sowohl das eigene Nutzfahrzeug (1) als auch die erfassten und unbekannten Reifen-Sensor-Module (6.i, 106.i) in Bewegung befinden.

11. Verfahren nach einem der vorhergehenden Ansprüche,
**dadurch gekennzeichnet, dass**
zusätzlich festgestellt wird, ob das mindestens eine erfasste und unbekannte Reifen-Sensor-Modul (6.i, 106.i, 107.i) zu einem Anhängerfahrzeug (3) eines eigenen Nutzfahrzeuges (1) gehört (St1.1, St1.2,),
wobei dazu nur die Datentelegramme (S1) in Schritt c) von unbekannten Reifen-Sensor-Modulen (6.i, 106.i) berücksichtigt werden, die auf einem Anhängerfahrzeug (3, 103) montiert sind.

12. Verfahren nach Anspruch 11,
**dadurch gekennzeichnet, dass**
zusätzlich festgestellt wird, ob das mindestens eine erfasste und unbekannte Reifen-Sensor-Modul (6.i, 106.i) zu einem Anhängerfahrzeug (3) eines eigenen Nutzfahrzeuges (1) gehört,
wobei dazu von dem mindestens einen erfassten und unbekannten Reifen-Sensor-Modul (6.i, 106.i) eine Anzahl von ausgegebenen Datentelegrammen (S1) in einem Zeitraum (dT) überwacht wird (St1.1, St1.2, St2.1, St2.2), und
das Auswerten der Datentelegramme (S1) in Schritt d) bereits stattfindet, bevor die Feststellung, ob das mindestens eine erfasste Reifen-Sensor-Modul (6.i, 106.i) zu dem eigenen Anhängerfahrzeug (3) gehört, abgeschlossen ist.

## Claims

1. Method for monitoring tyre states (p, T, σ) on vehicle tyres (7, 8, 9, 10, 108.i, 109.i),
having at least the following steps,
a) sensing whether at least one tyre sensor module (6.i, 106.i, 107.i) is present for measuring tyre states (p, T, σ) in a monitoring area (11);
b) determining whether the at least one sensed tyre sensor module (6.i, 106.i, 107.i) is unknown,
c) evaluating data telegrams (S1) of the at least one sensed and unknown tyre sensor module (6.i,
106.i, 107.i),
wherein the data telegrams (S1) comprise at least the information as to whether the tyre sensor module is arranged on a vehicle tyre of an extraneous traction machine (102) or on a vehicle tyre of a vehicle trailer (3, 103),
d) eliminating all the data telegrams (S1) which do not originate from a vehicle tyre on a vehicle trailer (3, 103),
wherein the information on the data telegrams (S1) is not taken into account during the subsequent evaluation,
e) evaluating data telegrams (S1) of unknown tyre sensor modules (6.i, 106.i) which originate from a vehicle tyre on a vehicle trailer (3/103), wherein the evaluation comprises at least one comparison of at least one tyre state (p, T, σ), transmitted by the data telegram (S1), with a limiting value (GW) (St2.1, St2.2),
wherein a respective target value to which the limiting value (GW) is oriented, is also transmitted with the data telegrams (S1) for the individual vehicle tyre,
f) outputting a warning signal (S2) if a tyre state (p, T, σ) exceeds or undershoots the respective limiting value (GW), in order to indicate that a tyre state (p, T, σ) of a tyre (7, 8, 9, 10, 108.i, 109.i) which is assigned to the at least one unknown tyre sensor module (6.i, 106.i, 107.i) is critical.

2. Method according to Claim 1,
**characterized in that**
a tyre temperature (T) and/or a tyre pressure (p) and/or a mechanical stress state (σ) and/or a profile depth and/or a wheel load are/is measured or determined as a tyre state by the tyre sensor module (6.i, 106.i) and output via the data telegram (S1) .

3. Method according to Claim 2,
**characterized in that**
the limiting value (GW) for the tyre pressure (p) is less than or equal to 80% of a target pressure (pSoll) for a vehicle tyre,
wherein a warning signal (S2) is output,
if the tyre pressure (p) of the corresponding tyre (7, 8, 9, 10, 108.i) undershoots the target pressure value (pSoll) by more than 20%.

4. Method according to one of the preceding claims,
**characterized in that**
the specific tyre data can be stored in the data memory of the tyre sensor modules after the mounting in the vehicle tyre and can be transmitted with the data telegram (S1),
wherein the tyre data comprise at least specifications relating to the target pressure, to the target temperature, to the mechanical target stress, to the target wheel load, to the minimum profile depth and mounting information,
wherein the mounting information specifies whether the tyre sensor module is mounted on a vehicle tyre of a traction machine or on a vehicle tyre of a vehicle trailer.

5. Method according to one of the preceding claims,
**characterized in that**
the limiting value for the tyre temperature (T) is greater than or equal to 120% of a target temperature (TSoll) in order to output of a warning signal (S2) when a temperature of the corresponding tyre (7, 8, 9, 10, 108.i) is excessive by more than 20%.

6. Method according to one of the preceding claims,
**characterized in that**
a sensor defect and/or a loose sensor are/is detected by the tyre sensor module (6.i, 106.i) as a critical sensor state and output via the data telegram (S1).

7. Method according to one of the preceding claims,
**characterized in that**
a sensor identification or sensor identifier is output by the tyre sensor module (6.i, 106.i, 107.i) via the data telegram (S1) in order to determine whether the tyre sensor module (6.i, 106.i, 107.i) is unknown.

8. Method according to one of the preceding claims,
**characterized in that**
the tyre sensor module (6.i, 106.i) senses whether the tyre sensor module (6.i, 106.i) is moving, and the movement state is output via the data telegram (S1) .

9. Method according to one of the preceding claims,
**characterized in that**
a tyre state (p, T, σ) which is output via the data telegram (S1) is compared with the limiting value (GW) and/or the sensor state is monitored,
only if the movement state of the utility vehicle (1) in question corresponds to the movement state of the sensed and unknown tyre sensor module (6.i, 106.i) .

10. Method according to one of the preceding claims,
**characterized in that**
a tyre state (p, T, σ) which is output via the data telegram (S1) is compared with the limiting value (GW) and/or the sensor state is monitored, only if both the utility vehicle (1) in question and the sensed and unknown tyre sensor modules (6.i, 106.i) are moving.

11. Method according to one of the preceding claims,
**characterized in that**
it is additionally determined whether the at least one sensed and unknown tyre sensor module (6.i, 106.i, 107.i) is associated (St1.1, St1.2,) with a trailer vehicle (3) of a utility vehicle (1) in question,
wherein only the data telegrams (S1) in step c) of unknown tyre sensor modules (6.i, 106.i) which are mounted on a trailer vehicle (3, 103) are taken into account for this purpose.

12. Method according to Claim 11,
**characterized in that**
it is additionally determined whether the at least one sensed and unknown tyre sensor module (6.i, 106.i) is associated with a trailer vehicle (3) of a utility vehicle (1) in question,
wherein for this purpose the at least one sensed and unknown tyre sensor module (6.i, 106.i) monitors a number of output data telegrams (S1) in a time period (dT) (St1.1, St1.2, St2.1, St2.2), and
the evaluation of the data telegrams (S1) already takes place in step d) before the determination as to whether the at least one sensed tyre sensor module (6.i, 106.i) is associated with the trailer vehicle (3) in question has been concluded.

## Revendications

1. Procédé de surveillance d'états de pneumatiques (p, T, σ) au niveau de pneumatiques de véhicules (7, 8, 9, 10, 108.i, 109.i),
comportant au moins les étapes suivantes :
a) détecter si au moins un module de capteur de pneumatique (6.i, 106.i, 107.i) est présent dans une zone de surveillance (11) pour mesurer des états de pneumatiques (p, T, σ) ;
b) déterminer si l'au moins un module de capteur de pneumatique (6.i, 106.i, 107.i) détecté est inconnu,
c) évaluer des télégrammes de données (S1) de l'au moins un module de capteur de pneumatique (6.i, 106.i, 107.i) détecté et inconnu, dans lequel les télégrammes de données (S1) comprennent au moins les informations indiquant si le module de capteur de pneumatique est disposé sur un pneumatique de véhicule d'un pneumatique de véhicule d'une machine de traction étrangère (102) ou sur un pneumatique de véhicule d'une remorque de véhicule (3, 103),
d) trier tous les télégrammes de données (S1) qui ne proviennent pas d'un pneumatique de véhicule présent sur une remorque de véhicule (3, 103), dans lequel les informations provenant desdits télégrammes de données (S1) ne sont pas prises en compte lors de l'évaluation effectuée ultérieurement,
e) évaluer des télégrammes de données (S1) de modules de capteurs de pneumatiques (6.i, 106.i) qui proviennent d'un pneumatique de véhicule présent sur une remorque de véhicule (3, 103),
dans lequel l'évaluation comprend (St2.1, St2.2) au moins une comparaison d'au moins un état de pneumatique (p, T, σ) transmis par l'intermédiaire du télégramme de données (S1) à une valeur limite (GW),
dans lequel une valeur de consigne respective vers laquelle est orientée la valeur limite (GW) est transmise en association avec les télégrammes de données (S1) pour les pneumatiques de véhicules individuels,
f) émettre un signal d'alarme (S2) lorsqu'un état de pneumatique (p, T, σ) s'élève au-dessus ou s'abaisse en dessous de la valeur limite (GW) respective pour indiquer qu'un état de pneumatique (p, T, σ) d'un pneumatique (7, 8, 9, 10, 108.i, 109.i) associé audit au moins un module de capteur de pneumatique inconnu (6.i, 106.i, 107.i) est critique.

2. Procédé selon la revendication 1,
**caractérisé en ce qu'**une température de pneumatique (T) et/ou une pression de pneumatique (p) et/ou un état de tension mécanique (σ) et/ou une profondeur de profil et/ou une charge de roue est/sont mesuré (s) ou déterminé(s) en tant qu'état de pneumatique par le module de capteur de pneumatique (6.i, 106.i) et est/sont délivré(s) par l'intermédiaire du télégramme de données (S1).

3. Procédé selon la revendication 2,
**caractérisé en ce que** la valeur limite (GW) de la pression de pneumatique (p) correspond à une valeur inférieure ou égale à 80 % d'une pression de consigne (pSoll) pour un pneumatique de véhicule,
dans lequel l'émission d'un signal d'alarme (S2) est effectuée lorsque la pression de pneumatique (p) du pneumatique (7, 8, 9, 10, 108.i) correspondant s'abaisse en dessous de la valeur de pression de consigne (pSoll) de plus de 20 %.

4. Procédé selon l'une des revendications précédentes,
**caractérisé en ce que** des données de pneumatiques spéciales sont stockées dans la mémoire de données du module de capteur de pneumatique après son montage dans des pneumatiques de véhicules et peuvent être transmises avec le télégramme de données (S1),
dans lequel les données de pneumatiques comprennent au moins des indications de la pression de consigne, de la température de consigne, de la tension mécanique de consigne, de la charge de roue de consigne, de la profondeur de profil minimale et des informations de montage,
dans lequel les informations de montage indiquent si le module de capteur de pneumatique est monté sur un pneumatique de véhicule d'une machine de traction ou sur un pneumatique de véhicule d'une remorque de véhicule.

5. Procédé selon l'une des revendications précédentes,
**caractérisé en ce que** la valeur limite de la température de pneumatique (T) correspond à une valeur supérieure ou égale à 120 % d'une température de consigne (TSoll) pour l'émission d'un signal d'alarme (S2) lorsque la température du pneumatique (7, 8, 9, 10, 108.i) correspondant est supérieure de plus de 20 %.

6. Procédé selon l'une des revendications précédentes,
**caractérisé en ce qu'**un défaut de capteur et/ou un capteur desserré est détecté par le module de capteur de pneumatique (6.i, 106.1) en tant qu'état de capteur critique et est émis par l'intermédiaire du télégramme de données (S1).

7. Procédé selon l'une des revendications précédentes,
**caractérisé en ce qu'**une identification de capteur ou une désignation de capteur est émise par le module de capteur de pneumatique (6.i, 106.1, 107.i) par l'intermédiaire du télégramme de données (S1) pour déterminer si le module de capteur de pneumatique (6.i, 106.1, 107.i) est inconnu.

8. Procédé selon l'une des revendications précédentes,
**caractérisé en ce que** le module de capteur de pneumatique (6.i, 106.1) détecte si le module de capteur de pneumatique (6.i, 106.1) se déplace et **en ce que** l'état de déplacement est fourni en sortie par l'intermédiaire du télégramme de données (S1).

9. Procédé selon l'une des revendications précédentes,
**caractérisé en ce qu'**un état de pneumatique (p, T, σ) émis par l'intermédiaire du télégramme de données (S1) n'est comparé à la valeur limite (GW) ou **en ce que** l'état de capteur n'est surveillé que lorsque l'état de déplacement d'un véhicule utilitaire (1) concerné correspond à l'état de déplacement du module de capteur de pneumatique (6.i, 106.1) détecté et inconnu.

10. Procédé selon l'une des revendications précédentes,
**caractérisé en ce qu'**un état de pneumatique (p, T, σ) émis par l'intermédiaire du télégramme de données (S1) n'est comparé à la valeur limite (GW) ou **en ce que** l'état de capteur n'est surveillé que lorsque le véhicule utilitaire (1) concerné ainsi que le module de capteur de pneumatique (6.i, 106.1) détecté et inconnu sont en mouvement.

11. Procédé selon l'une des revendications précédentes,
**caractérisé en ce qu'**il est en outre déterminé si ledit au moins un module de capteur de pneumatique (6.i, 106.i, 107.i) détecté et inconnu appartient (St1.1, St1.2,) à un véhicule remorque (3) d'un véhicule utilitaire (1) concerné,
dans lequel on ne tient compte à cet effet lors de l'étape c) que des télégrammes de données (S1) des modules de capteurs de pneumatiques (6.i, 106.i) inconnus qui sont montés sur un véhicule remorque (3, 103) .

12. Procédé selon la revendication 11,
**caractérisé en ce qu'**il est en outre déterminé si ledit au moins un module de capteur de pneumatique détecté et inconnu (6.i, 106.i) appartient à une remorque (3) d'un véhicule utilitaire (1) concerné,
dans lequel ledit au moins un module de capteur de pneumatique (6.i, 106.i) détecté et inconnu ne surveille (St1.1, Stl.2, St2.2) à cet effet qu'un nombre de télégrammes de données (S1) émis au cours d'un intervalle de temps (dT), et
l'évaluation des télégrammes de données (S1) est effectuée à l'étape d) avant qu'il soit déterminé si ledit au moins un module de capteur de pneumatique (6.i, 106.i) détecté appartient au véhicule remorque (3) concernée.
